# FASCICULE DE BREVET EUROPEEN

(11) **EP 0 797 392 B1**
(45) Date de publication et mention de la délivrance du brevet: **17.03.1999**
(21) Numéro de dépôt: 95941123.2
(22) Date de dépôt: 21.11.1995
(51) Int. Cl.: A23G 9/28

(54) **DISPOSITIF POUR CONFORMER ET DEBITER DES PORTIONS DE MATIERE PATEUSE, DU GENRE DES CREMES GLACEES**
ZUM FORMEND UND PORTIONIEREND SPENDER FÜR PASTÖSEN MATERIAL SOWIE SPEISEEIS
DEVICE FOR SHAPING AND DISPENSING PORTIONS OF A PASTY MATERIAL SUCH AS ICE CREAM

(30) Priorité: 21.11.1994 FR 9414302; 06.01.1995 FR 9500414
(43) Date de publication de la demande: 01.10.1997
(73) Titulaire: HECTOR, Didier, F-03110 Charmeil (FR); Juhle, Jean-Louis, 63000 Clermont-Ferrand (FR)
(72) Inventeur: HECTOR, Didier, F-03110 Charmeil (FR); Juhle, Jean-Louis, 63000 Clermont-Ferrand (FR)
(74) Mandataire: Chanet, Jacques
(86) Numéro de dépôt international: FR9501536
(87) Numéro de publication internationale: WO9615681

(56) Documents cités:
- EP-A- 0 201 141
- EP-A- 0 239 203
- WO-A-92/07702
- WO-A-94/14333
- US-A- 2 716 385
- PATENT ABSTRACTS OF JAPAN vol. 8 no. 283 (C-258) ,25 Décembre 1984 & JP,A,59 151844 (TACHIBANA GENTAROU) 30 Août 1984,
- PATENT ABSTRACTS OF JAPAN vol. 16 no. 168 (C-0932) ,22 Avril 1992 & JP,A,04 016147 (TAKESHI ICHINOMIYA) 21 Janvier 1992,
- DATABASE WPI Week 8847 Derwent Publications Ltd., London, GB; AN 88-334807 & JP,A,63 248 619 (EZAKI GLICO) , 14 Octobre 1988

## Description

L'invention a pour objet un dispositif, dit tête de dosage-formatage, destiné à conformer et à débiter, notamment en portion sphérique, une matière de consistance pâteuse, crème glacée par exemple.

On connaît par la publication des brevets US 2728306, US 2716385, US 2638065, US 1544802, WO 9207702, US4420948, US 3155053, US 1412727, US 4707997, US 2719494 et EP 0509967 des dispositifs pour le formatage et la distribution de portion de crème glacée.

Ces machines mettent en oeuvre une coupelle hémisphérique, sensiblement analogue aux cuillères à glace à utilisation manuelle, disposée au débouché d'une buse d'amenée de crème glacée, la coupelle étant destinée à pivoter autour de son axe pour trancher la masse de glace suivant une portion en calotte partiellement sphérique, et déposer cette dernière dans une coupe ou un gobelet.

On connaît aussi par le document Patent Abstract of Japan, vol.8, N°283 du 25/12/84 une machine destinée à former des sphères de pâte de haricot, matière incompressible ; un évent est ménagé dans le moule pour autoriser une échappée de l'air qu'il contient, et permettre ainsi son remplissage.

Un dispositif du genre de celui auquel se rapporte l'invention, dit tête de dosage-formatage, est destiné à conformer et à débiter en portion sphérique ou analogue une matière de consistance pâteuse, crème glacée notamment, et il comprend une pièce comportant une partie annulaire fixe, dite bouche, destinée à être rapportée à la base d'au moins un conteneur de la dite matière, pour former un conduit d'amenée de celle-ci vers un ensemble, dit doseur-formateur, qu'il supporte en rotation, le dit ensemble doseur-formateur comprenant au moins une pièce creuse à symétrie de demi-révolution, dite coupelle, et au moins une pièce, dite racloir, en forme d'arceau épousant la surface interne de la coupelle, les axes de rotation de la coupelle et du racloir étant confondus et la coupelle au moins pouvant prendre deux positions, dites respectivement convexe et concave, dans chacune desquelles positions elle obture la dite bouche pour respectivement permettre le remplissage et la vidange d'une chambre à symétrie de révolution formée par l'espace délimité par la coupelle en position convexe augmenté de l'évidement qu'elle a ménagé dans la matière après son passage en position concave.

Le but de l'invention est de conformer des portions de crème glacée ayant une forme de révolution complète, sphère ou boule notamment, et non plus une forme partiellement sphérique, telles que celles obtenues par les dispositifs du genre de l'art antérieur.

Dans un premier temps, la démarche inventive a conduit les Demandeurs, après de nombreuses tentatives de mise au point infructueuses des dispositifs de l'art antérieur, à pourvoir la coupelle, dans le cas d'un mode de remplissage de la chambre, dit frontal, suivant lequel la matière est guidée dans un canal de remplissage formé par le cumul des segments sphériques successifs de la chambre depuis la bouche jusqu'au pôle de la coupelle, d'un évent situé dans la zone du pôle de la coupelle.

Puis dans un deuxième temps, les Demandeurs, élaborant un autre mode de remplissage de la chambre, dit tangentiel, qui s'effectue par enroulement de la matière autour de l'axe de rotation de l'ensemble doseur-formateur tangentiellement à la face intérieure de la chambre suivant un trajet (ou canal) formé de secteurs sphériques successifs, ont aménagé le conduit d'amenée de manière à ce qu'il débouche dans la chambre sur seulement une partie latérale de celle-ci, au moyen d'un déflecteur conformé en dôme éventré qui obstrue l'autre partie latérale de la chambre.

On notera que l'avantage de cette solution réside dans l'élaboration de boules creuses, et donc formées d'une quantité réduite de matière, quoique présentant un volume extérieur de révolution parfaitement conformé.

Dans le cas d'un mode de remplissage tangentiel, soit le remplissage de la chambre s'effectue par enroulement de la matière jusqu'à la faire parvenir à l'axe de rotation de l'ensemble doseur-formateur, et l'évent est situé dans la zone de l'axe de rotation de l'ensemble doseur formateur, soit le remplissage peut ne pas atteindre le dit axe de rotation, et l'évent peut, seulement ou en complément d'un autre évent situé dans la dite zone de l'axe de rotation de l'ensemble doseur-formateur, être situé dans le déflecteur en débouchant aux environs du sommet du dôme du déflecteur.

Ainsi, pour définir la règle générale de l'invention, la tête de dosage-formatage est pourvue d'au moins un évent ménagé à l'extrémité terminale d'un canal dans lequel chemine la matière depuis la bouche jusqu'au du dit évent, ce dernier conférant à la coupelle la fonction de paroi du canal.

On comprendra par canal un organe destiné à guider la matière pâteuse depuis un orifice d'entrée de la matière, qui correspond à la bouche, jusqu'à un orifice d'échappement d'air, ou évent.

Il convient de noter, à ce stade de la description, que l'absence d'évent conduit à une surpression dans la chambre, qui finalement s'oppose à son remplissage qui de ce fait ne peut être que partiel.

Il résulte de ces dispositions, la totalité de la coupelle recevant de la matière pâteuse grâce à la situation de l'évent à l'extrémité terminale du dit canal, qu'après rotation de la coupelle et du racloir, l'utilisateur dispose d'une boule de matière dont la conformation a été pleinement maîtrisée.

On notera que la conformation hémisphérique de la coupelle, classique, n'est que préférée, et que selon un autre aspect de l'invention visant à la production de portion de matière pâteuse cylindrique, ellipsoïdale, oblongue ou encore conique, la coupelle présentant une demi surface de révolution hémi-cylindrique, hémi-ellipsoïdale ou encore hémi-conique en fonction de la géométrie de révolution recherchée.

De préférence, la tête de dosage-formatage et le conteneur forment un ensemble monobloc consommable de conditionnement de la dite matière, prévu pour être interchangé sur une machine distributrice.

Dans le cas notamment où la coupelle présente une demi-forme de révolution allongée, les Demandeurs proposent de manière avantageuse que la bouche soit compartimentée en au moins deux parties prévues pour communiquer avec un conteneur respectif, de telle sorte que les portions obtenues puissent être élaborées à partir de différentes crèmes glacées adjointes, d'un aspect et/ou d'un parfum respectifs par exemple. Néanmoins, il peut être prévu de compartimenter la bouche, non seulement transversalement à la manière qui vient d'être décrite, mais aussi annulairement pour l'obtention, par exemple, de boules de crèmes glacées fourrées, dont la périphérie soit d'un premier parfum enrobant un autre parfum de crème glacée, ou même enrobant une matière pâteuse d'une autre nature.

L'ensemble doseur-formateur peut être mû en rotation, soit manuellement, soit par des organes de puissance, et accessoirement être équipé de moyens d'entraînement en rotation du type pignonerie intervenant en liaison et/ou indépendamment sur chacun des éléments de l'ensemble doseur-formateur, coupelle et racloir notamment, le composant.

Selon des formes alternatives de réalisation, les moyens d'amenée de la matière pâteuse dans la coupelle sont, soit du type a poussée en amont de la matière, soit du type à dépression créée en aval de la chambre et au travers de l'évent.

Selon diverses formes de réalisation des moyens d'amenée de la matière pâteuse du type à poussée, ceux-ci comprennent un piston de poussée de la matière hors du conteneur vers la bouche, ou encore sont formés grâce à une conformation du conteneur en soufflet, qui participe alors des dits moyens, ou encore sont du type à extrusion et comprennent au moins une vis sans fin.

On comprendra que selon des formes plus complexe de réalisation de l'ensemble doseur-formateur, plus particulièrement destinées à être utilisées pour des pâtes foisonnées, celui-ci peut comprendre un couple de coupelles en superposition, et/ou un couple de racloirs, chacune des coupelles et chacun des racloirs pouvant être animé en rotation indépendamment les uns des autres.

La présente invention sera mieux comprise, et des détails en relevant apparaîtront, à la description qui va en être faite de formes préférées de réalisation, en relation avec les figures des planches annexées, dans lesquelles :
la fig.1 illustre en perspective éclatée une tête de dosage formatage de l'invention selon une première forme de réalisation,
la fig.2 représente la même à l'état des pièces regroupées,
la fig.3 illustre en perspective analogue à la fig.1 une forme plus particulière de réalisation de la tête,
les fig.4 à 6 illustrent en coupe schématique un mode de remplissage, dit frontal, de la coupelle, celle-ci étant, respectivement aux figures, en position convexe et en position concave,
la fig.7 illustre en coupe une tête à deux coupelles,
la fig.8 illustre en coupe une tête à deux racloirs,
les fig.9 et 10 illustrent en coupe schématique une application du dispositif de l'invention avec un conteneur dit "en soufflet", respectivement en position déployée et compressée,
la fig.11 illustre en coupe schématique un dispositif de l'invention équipé de moyens d'amenée de la matière par piston,
la fig.12 illustre un dispositif de l'invention équipé de moyens d'amenée de la matière du type à extrusion,
la fig.13 illustre une application du dispositif de l'invention pour l'obtention d'une boule à double parfum de crème glacée,
les fig.14 à 16 illustrent diverses formes respectives d'un ensemble doseur-formateur de l'invention,
la fig.17 illustre des moyens d'amenée de la matière du type à dépression,
la fig.18 illustre un ensemble doseur-formateur de l'invention comportant un déflecteur pour un mode de remplissage tangentiel de la coupelle.
la fig.19 est une section schématique d'un même ensemble doseur-formateur.

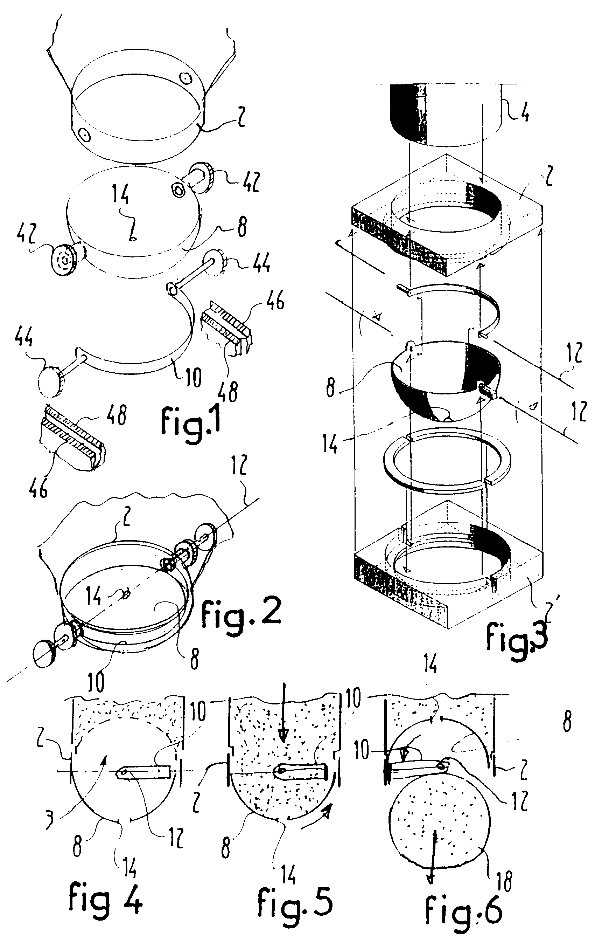

Sur les figures, le dispositif de l'invention comprend une pièce annulaire fixe 2, dite bouche, destinée à recevoir l'extrémité d'un conduit 4 d'amenée d'une matière pâteuse en provenance d'un conteneur 6 à la base duquel elle est rapportée, la dite bouche 2 supportant en rotation une coupelle 8 et un racloir 10, qui forment conjointement un ensemble doseur-formateur, dont les axes de rotation 12 sont confondus et situés dans le plan d'anneau de la bouche 2. La coupelle 8 peut prendre deux positions, dite respectivement convexe (fig.4 et 5) et concave (fig.6), dans chacune desquelles elle obture la bouche 2, les positions cumulées de la coupelle (8) délimitant à la base de la bouche (2) une chambre (3) de remplissage, lorsque la coupelle (8) est retournée en position convexe après avoir inscrit son passage en position concave dans la matière pâteuse contenue dans la bouche (2).

Le procédé de mise en oeuvre d'un dispositif tel que ci-dessus consiste à :
a) mettre la coupelle 8 en position convexe (fig.4) pour obturer la bouche 2,
b) amener la matière à remplir la chambre délimitée par la coupelle 8,
c) faire tourner la coupelle 8, qui est alors pleine, de 180° pour l'amener en position concave (fig.5),
d) faire tourner le racloir 10 de 180° en lui faisant décrire, en la raclant, la surface interne de la coupelle 8.

Le résultat obtenu est une boule 18 de matière parfaitement conformée et pleine, grâce à la démarche inventive qui a consisté à pourvoir la tête de dosage-formatage d'un évent 16 ménagé à l'emplacement déterminé par la dynamique de la matière lorsqu'elle remplit la chambre 3, et notamment la coupelle 8, lequel emplacement correspond à l'ultime fraction remplie du volume de la chambre 3, selon le mode de remplissage.

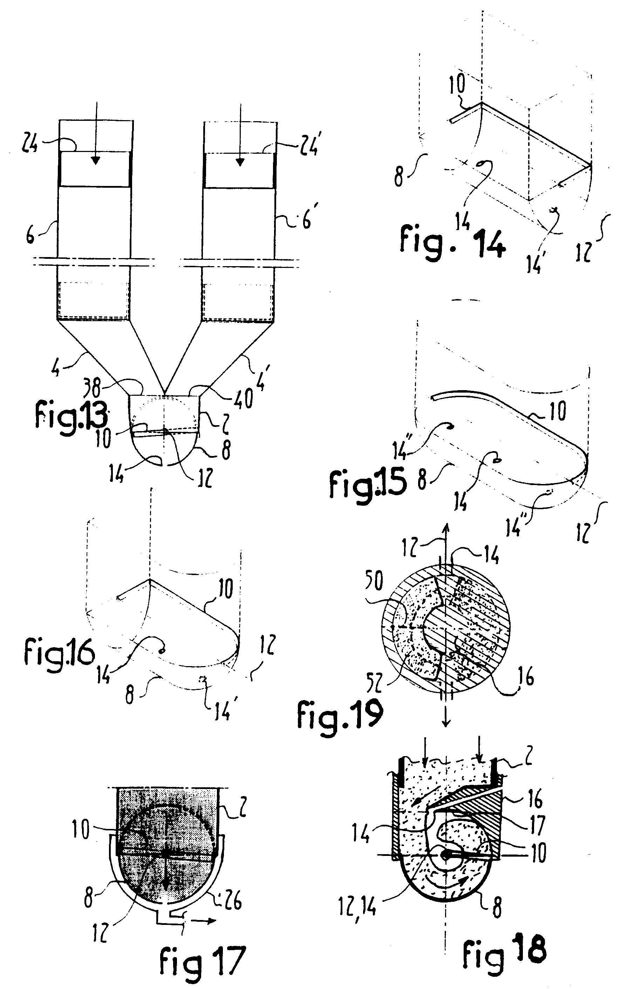

Selon deux exemples de mode de remplissage, respectivement illustrés sur les fig.4 à 6 et 18 et 19,
- soit (fig.4 à 6) le remplissage de la chambre est frontal à la coupelle 8, en s'effectuant dans un canal de cheminement de la matière depuis la bouche 2 jusqu'au pôle de la coupelle (8), et l'évent 14 est situé dans la zone du pôle de la coupelle 8,
- soit (fig.18 et 19) le remplissage de la chambre est tangentiel à la coupelle 8, en s'effectuant par enroulement de la matière le long de la paroi de la coupelle 8 autour de son axe de rotation 12, et l'évent 14 est par exemple situé dans un déflecteur 16 conformé en dôme éventré, de manière à déboucher sur la paroi concave 17 du dôme au environ du sommet de ce dernier, la paroi 17 et la coupelle (8) formant conjointement les parois du canal de remplissage. Par ailleurs et de préférence, un évent est ménagé dans l'axe de rotation de l'ensemble doseur-formateur. On comprendra que la seule présence de l'évent dans le déflecteur suffit dès lors que l'on désire ne réaliser que des boules creuses, le cheminement de la matière s'achevant aux environs du débouché du dôme du déflecteur.

On comprendra que l'évent 14 ne peut pas être confondu avec un quelconque manque d'étanchéité entre la bouche 2 et l'ensemble doseur-formateur 8,10, dans la zone d'articulation en rotation 12 de ce dernier notamment, manque d'étanchéité, d'une part dont le caractère incontrôlable et aléatoire, tel qu'il est appliqué dans l'art antérieur, ne peut conduire à l'obtention certaine d'une portion 18 d'une révolution parfaitement conformée, mais néanmoins d'autre part ne pourrait être envisageable pour participer de l'invention qu'en combinaison avec des moyens de remplissage tangentiels de la coupelle 8, tels que le déflecteur 16.

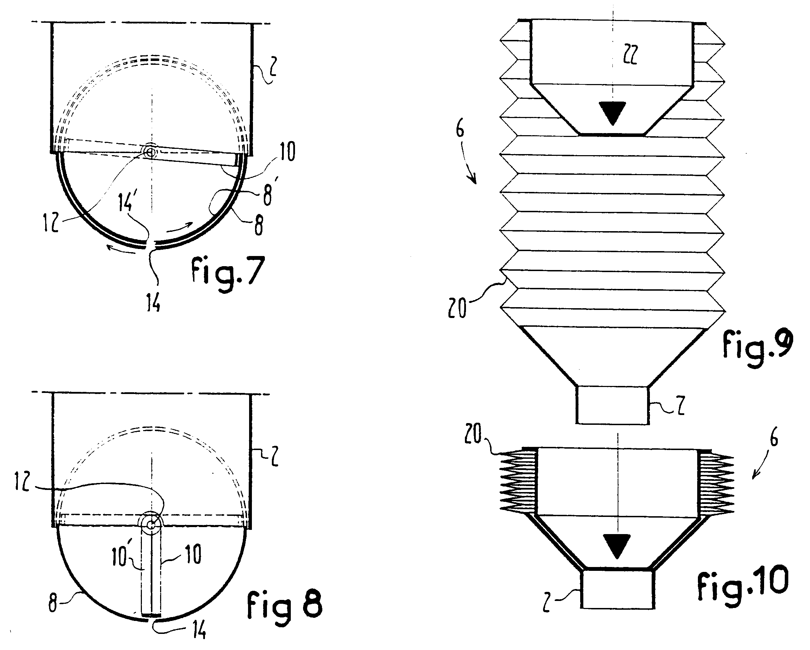

Suivant une variante illustrée sur la fig.7 et plutôt destinée à l'utilisation de matière foisonnée, les coupelles 8 et 8' sont au nombre de deux et prévues pour tourner en sens inverse pour venir se recouvrir, soit en position convexe, soit en position concave.

De la même manière et suivant une autre variante illustrée sur la fig.8, les racloirs 10 et 10' sont au nombre de deux et sont prévus pour tourner en sens inverse, et pour venir en butée l'un contre l'autre.

On comprendra que ces deux dernières variantes peuvent être combinées sous la forme d'une tête à deux coupelles 8 et 8', et deux racloirs 10 et 10'.

Sur les fig.9 et 10, un conteneur 6 formé d'une cartouche particulièrement avantageuse pour contenir de la crème glacée, est remarquable par sa structure en "soufflet" avec une pluralité de plis 20 perpendiculaires à l'axe de poussée 22 sur la matière, permettant une vidange du conteneur par pression "en accordéon". On notera que ce type de conteneur conformé en soufflet 20, est tel que sa conformation participe des moyens d'amenée de la matière pâteuse dans la bouche 2, et qu'il peut ou non incorporer une tête de l'invention.

La cartouche peut être utilisée avec un appareil ménager, dans lequel les manoeuvres des organes sont effectuées au moyen de leviers actionnés manuellement. Elle peut encore être utilisée dans une machine de distribution dans laquelle les manoeuvres des organes sont effectuées au moyen de cames ou d'engrenages actionnés mécaniquement; de telles machines destinées par exemple à la distribution de boules de crème glacée, pourront comporter plusieurs postes de distribution correspondant chacun à un "parfum". Pour la distribution de crèmes glacées, la machine sera pourvue de moyens réfrigérants.

On remarquera à ce propos sur les fig.1 et 2 la présence d'une pignonerie (42,44,46,48) pour l'entraînement en rotation de l'ensemble doseur-formateur, la coupelle d'une part et le racloir d'autre part étant respectivement pourvus de pignons destinés à coopérer avec des crémaillères respectives manoeuvrables chacune en translation et participantes d'une machine destinée à être équipée du dispositif de l'invention. Selon une forme de réalisation non représentée sur les figures, la coupelle et le racloir sont entraînés en rotation à partir d'une extrémité respective de leur axe de rotation.

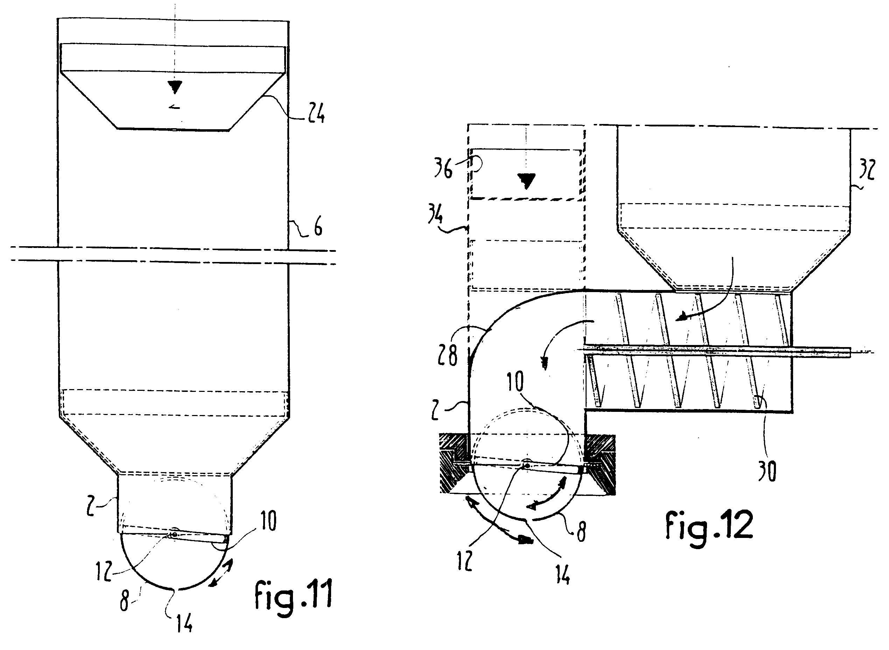

Sur la fig.11, l'amenée de matière vers la coupelle 8 s'effectue par poussée au moyen d'un piston 24, lequel piston 24 peut être par exemple manoeuvré par pression d'air ou par l'intermédiaire d'une tige manoeuvrable en translation, tandis que sur la fig.17 les moyens 26 d'amenée de matière sont du type à dépression et que sur la fig.12, l'amenée de matière s'effectue par extrusion. Dans ce dernier cas, la tête peut être partie intégrante d'une machine comportant des moyens d'entraînement en rotation des organes rotatifs de la tête, tels que pignonerie 42,44,46,48 sus visée et illustrée sur les fig.1 et 2, des moyens d'amenée de la matière, comprenant un conduit coudé 28 formant la bouche et une vis sans fin 30, et des moyens d'approvisionnement de la matière, telle qu'une trémie 32. On a représenté en pointillés gras un conduit annexe 34 pourvu d'un piston 36 utilisable dans les cas de matières très compactes.

Sur la fig.13, la bouche 2 est compartimentée, chacun des compartiments 38,40 de la bouche 2 communiquant avec un conteneur respectif 6,6', de manière à former des boules de crème glacée à plusieurs parfums. On remarquera à ce propos sur la fig.19, la représentation schématique de parois de compartimentement, dont une première 50 pour compartimenter la bouche transversalement, et dont une deuxième 52, pour la compartimenter annulairement.

Les fig.14 à 16 illustrent diverses conformations de l'ensemble doseur-formateur, visant à produire des portions de crème glacée allongée à géométrie de révolution. On remarquera que dans ce cas, la coupelle 8 peut comporter plusieurs évents 14,14',14'' en fonction du cheminement de la matière le long du canal de remplissage auquel participe la paroi de la coupelle 8.

Selon des aménagements préférés :
- le bord de la coupelle est biseauté pour être organisé en tranchant, afin de faciliter la circulation de la coupelle dans la matière pâteuse lors de son passage en position concave.
- L'un au moins des bords du racloir est tranchant pour diminuer le couple de tranchage lors de la rotation du racloir, et
- l'épaisseur du racloir est supérieure à celle de la coupelle, de telle sorte qu'une rotation complète, c'est à dire de 360°, du racloir crée dans la matière pâteuse un chemin facilitant le passage de la coupelle en position concave.

## Revendications

1. Dispositif, dit tête de dosage-formatage, destiné à conformer et à débiter en portion sphérique, ou analogue, une matière de consistance pâteuse, crème glacée notamment, du genre de dispositif comprenant une pièce comportant une partie annulaire fixe, dite bouche (2), destinée à être rapportée à la base d'au moins un conteneur (6) de la dite matière, pour former un conduit d'amenée de celle-ci vers un ensemble, dit doseur-formateur, qu'il supporte en rotation, le dit ensemble doseur-formateur comprenant au moins une pièce creuse à symétrie de demi-révolution, dite coupelle (8), et au moins une pièce, dite racloir (10), en forme d'arceau épousant la surface interne de la coupelle (8), les axes (12) de rotation de la, ou des, coupelle (8) et du racloir (10) étant confondus et la coupelle (8) au moins pouvant prendre deux positions, dites respectivement convexe (fig.4) et concave (fig.5), dans chacune desquelles positions elle obture la dite bouche (2) pour respectivement permettre le remplissage et la vidange d'une chambre (3) à symétrie de révolution formée par l'espace délimité par la coupelle (8) en position convexe augmenté de l'évidement qu'elle a ménagé dans la matière après son passage en position concave, caractérisé :
en ce que la dite tête de dosage-formatage (2,8,10) est pourvue d'au moins un évent (14,14',14'') ménagé à l'extrémité terminale d'un canal dans lequel chemine la matière depuis la bouche (2) jusqu'au dit évent (14), ce dernier conférant à la coupelle (8) la fonction de paroi du canal ;

2. Dispositif selon la revendication 1, caractérisé :
en ce que, selon un mode de remplissage de la chambre (3), dit frontal, suivant lequel le canal de remplissage est formé par le cumul des segments sphériques successifs de la chambre (3) depuis la bouche (2) jusqu'au pôle de la coupelle (8), l'évent (14) est situé dans la zone du pôle de la coupelle (8) (fig.4 à 6) ;

3. Dispositif selon la revendication 1, caractérisé :
en ce que, selon un mode de remplissage, dit tangentiel, s'effectuant par enroulement de la matière autour de l'axe de rotation (12) de l'ensemble doseur-formateur (8,10,16) tangentiellement à la face intérieure de la chambre (3) suivant un trajet (ou canal) formé de secteurs sphériques successifs, le conduit d'amenée (2) débouche dans la chambre (3) sur seulement une partie latérale de celle-ci, au moyen d'un déflecteur (16) conformé en dôme (17) éventré qui obstrue l'autre partie de la bouche (2) et qui surplombe la coupelle (8) dans l'une quelconque de ses deux positions;

4. Dispositif selon la revendication 3, caractérisé :
en ce que, le remplissage de la chambre (3) s'effectuant par enroulement de la matière jusqu'à la faire parvenir à l'axe de rotation (12) de l'ensemble doseur-formateur (8,10,16), l'évent (14) est situé dans la zone de l'axe de rotation (12) de l'ensemble doseur-formateur (8,10) ;

5. Dispositif selon l'une quelconque des revendications 3 et 4, caractérisé :
en ce que l'évent (14) est ménagé dans le déflecteur (16) et débouche aux environs du sommet du dôme (17) du déflecteur (16) ;

6. Dispositif selon l'une quelconque des revendications précédentes, caractérisé :
en ce que la tête de dosage-formatage (2,8,10) et le conteneur (6) forment un ensemble monobloc consommable de conditionnement de la dite matière ;

7. Dispositif selon l'une quelconque des revendications précédentes, caractérisé :
en ce que la bouche (2) est compartimentée en au moins deux parties (38,40) prévues pour communiquer avec un conteneur respectif (6,6') (fig.13) ;

8. Dispositif selon l'une quelconque des revendications précédentes, caractérisé :
en ce qu'il comprend des moyens d'entraînement en rotation du type pignonerie (42,44,46,48) de l'ensemble doseur-formateur (8,10) (fig.1 et 2) ;

9. Dispositif selon l'une quelconque des revendications précédentes, caractérisé :
en ce que les dits moyens d'amenée de matière pâteuse dans la coupelle (8) sont du type à poussée en amont de la matière ;

10. Dispositif selon la revendication 9, caractérisé:
en ce que le conteneur (6) est conformé en soufflet (20) et participe des moyens d'amenée de la matière du type à poussée (2) (fig.9 et 10);

11. Dispositif selon la revendication 9, caractérisé :
en ce que les moyens d'amenée de la matière, du type à extrusion, comprennent au moins une vis sans fin (30) (fig.12) ;

12. Dispositif selon l'une quelconque des revendications 1 à 8, caractérisé :
en ce que les moyens (26) d'amenée de la matière sont du type à dépression créés en aval de la chambre (3) et au travers de l'évent (14) (fig.17).

## Claims

1. Device, known as a dispensing and shaping head, designed to shape and dispense in spherical or similar portions a substance of pasty consistency, in particular ice-cream, the said device being of the type that comprises a component having a fixed annular part, called the mouth (2), which is designed to be positioned at the bottom of at least one container (6) of the said substance, forming a feed channel which leads the substance towards an assembly, known as the dispensing and shaping assembly, which comprises at least one hemispherically symmetrical hollow element, known as the scoop (8), and at least one element, known as the scraper (10), in the form of an arc shaped to fit the inside surface of the scoop (8), the rotation axes of the scoop (8) and the scraper (10) being coincident and such that at least the scoop (8) can assume two positions, known respectively as the convex position (Fig. 4) and the concave position (Fig. 5), in each of which it blocks the said mouth (2) respectively to allow the filling or the emptying of a rotationally symmetrical chamber (3) formed by the space delimited by the scoop (8) in its convex position, increased by the hollow left in the substance after the scoop has moved to the concave position,
**characterized in that**
the said dispensing and shaping head (2, 8, 10) is provided with at least one vent-hole (14, 14', 14'') formed at the far end of a feed channel along which the substance is impelled from the mouth (2) to the said vent-hole (14), such that the latter confers on the scoop (8) the function of the wall of the feed channel.

2. Device according to Claim 1,
**characterized in that**
according to one way of filling the chamber (3), known as the frontal method, in which the filling channel is formed as the sum of successive spherical segments of the chamber (3) from the mouth (2) as far as the pole of the scoop (8), the vent-hole (14) is located in the area of the pole of the scoop (8) (Figs. 4 to 6).

3. Device according to Claim 1,
**characterized in that**
according to one way of filling, known as the tangential method, which takes place by rolling the substance around the rotation axis (12) of the dispensing and shaping assembly (8, 10, 16), tangentially to the inside face of the chamber (3) along a path (or channel) formed of successive spherical sectors, the feed channel (2) opens into the chamber (3) only at one side thereof by virtue of a deflector (16) shaped as an open dome (17) which obstructs the other part of the mouth (2) and which overhangs the scoop (8) in either of its two positions.

4. Device according to Claim 3,
**characterized in that**
the chamber (3) is filled by rolling of the substance until it reaches the rotation axis (12) of the dispensing and shaping assembly (8, 10, 16), and the vent-hole (14) is located in the area of the rotation axis (12) of the dispensing and shaping assembly (8, 10).

5. Device according to either of Claims 3 or 4,
**characterized in that**
the vent-hole (14) is formed in the deflector (16) and opens in the area of the top of the dome (17) of the deflector (16).

6. Device according to any of the preceding claims,
**characterized in that**
the dispensing and shaping head (2, 8, 10) and the container (6) form a monoblock consumable whole for the packaging of the said substance.

7. Device according to any of the preceding claims,
**characterized in that**
the mouth (2) is divided into at least two parts (38, 40) designed to communicate with respective containers (6, 6').

8. Device according to any of the preceding claims,
**characterized in that**
the device comprises gear-type means (42, 44, 46, 48) for rotating the dispensing and shaping assembly (8, 10) (Figs. 1 and 2).

9. Device according to any of the preceding claims,
**characterized in that**
the said means of impelling the pasty substance into the scoop (8) are of the pusher type upstream from the substance.

10. Device according to Claim 9,
**characterized in that**
the container (6) is shaped as a bellows (20) and comprises pusher-type means (22) (Figs. 9 and 10).

11. Device according to Claim 9,
**characterized in that**
the means of impelling the substance, which are of the extrusion type, comprise at least one worm-screw (30) (Fig. 12).

12. Device according to any of Claims 1 to 8,
**characterized in that**
the means (26) for impelling the substance are of the suction type, located downstream from the chamber (3) and acting through the vent-hole (14) (Fig. 17).

## Patentansprüche

1. Vorrichtung, Dosier- und Formatkopf genannt, zur Formung und Förderung eines Mediums von pastenartiger Konsistenz, insbesondere Eiscreme, in sphärischer oder ähnlicher Portion, von der Art einer Vorrichtung mit einem Teil, das einen festen ringförmigen Teil, Mundstück (2) genannt, umfaßt, das auf die Basis mindestens eines Behälters (6) des besagten Mediums aufgesteckt wird, um eine Leitung für die Zuführung desselben zu einer Einheit, Dosier- und Formateinheit genannt, zu bilden, die sie rotierend trägt, wobei die besagte Dosier- und Formateinheit mindestens ein halbrotationssymmetrisches Hohlteil, Schale (8) genannt, umfaßt und mindestens ein bogenförmiges Teil, Schaber (10) genannt, das sich an die Innenfläche der Schale (8) anpaßt, wobei die Rotationsachsen (12) der Schale(n) (8) und des Schabers (10) übereinstimmen und mindestens die Schale (8) zwei Positionen einnehmen kann, konvex (Abb. 4) bzw. konkav (Abb. 5) genannt, in denen sie das besagte Mundstück (2) jeweils verschließt, um so das Füllen bzw. Entleeren einer rotationssymmetrischen Kammer (3), gebildet aus dem von der in konvexer Position befindlichen Schale (8) begrenzten Raum, vergrößert um die Aushöhlung, die sie nach ihrem Übergang in die konkave Position in das Medium eingearbeitet hat, zu ermöglichen, gekennzeichnet:
dadurch, daß der besagte Dosier- und Formatkopf (2, 8, 10) mit mindestens einer Entlüftungsöffnung (14, 14', 14'') ausgestattet ist, die in das äußerste Ende eines Kanals eingearbeitet ist, in dem das Medium von dem Mundstück (2) bis zu der besagten Entlüftungsöffnung (14) gefördert wird, wobei diese letztgenannte der Schale (8) die Funktion einer Kanalwand verleiht;

2. Vorrichtung nach Anspruch 1, gekennzeichnet:
dadurch, daß nach einer Füllart der Kammer (3), frontal genannt, nach der der Füllkanal aus der Anhäufung der aufeinanderfolgenden sphärischen Segmente der Kammer (3) vom Mundstück (2) bis zum Pol der Schale (8) gebildet ist, die Entlüftungsöffnung (14) sich im Bereich des Pols der Schale (8) befindet (Abb. 4 bis 6);

3. Vorrichtung nach Anspruch 1, gekennzeichnet:
dadurch, daß nach einer Füllart, tangential genannt, die durch Wickeln des Mediums um die Rotationsachse (12) der Dosier- und Formateinheit (8, 10, 16) tangential zu der Innenseite der Kammer (3) gemäß einem Verlauf (oder Kanal) erfolgt, der aus aufeinanderfolgenden sphärischen Segmenten gebildet ist, die Zuführleitung (2) nur auf einem Seitenteil der Kammer (3) in dieselbe mündet mit einem ausgehöhlten, als Kuppel (17) ausgebildeten Ablenker (16), der den anderen Teil des Mundstücks (2) versperrt und der die Schale (8) in jeder ihrer beiden Positionen überragt;

4. Vorrichtung nach Anspruch 3, gekennzeichnet:
dadurch, daß das Füllen der Kammer (3) durch Wickeln des Mediums erfolgt, bis dieses zur Rotationsachse (12) der Dosier- und Formateinheit (8, 10, 16) gelangt, und die Entlüftungsöffnung (14) sich im Bereich der Rotationsachse (12) der Dosier- und Formateinheit (8, 10) befindet;

5. Vorrichtung nach einem der Ansprüche 3 und 4, gekennzeichnet:
dadurch, daß die Entlüftungsöffnung (14) in den Ablenker (16) eingearbeitet ist und in die Nähe des Scheitels der Kuppel (17) des Ablenkers (16) mündet;

6. Vorrichtung nach einem der obenstehenden Ansprüche, gekennzeichnet:
dadurch, daß der Dosier- und Formatkopf (2, 8, 10) und der Behälter (6) eine aus einem Block bestehende, verbrauchbare Einheit zur Aufbereitung des besagten Mediums bilden;

7. Vorrichtung nach einem der obenstehenden Ansprüche, gekennzeichnet:
dadurch, daß das Mundstück (2) in mindestens zwei Teile (38, 40) unterteilt ist, welche dafür vorgesehen sind, mit einem entsprechenden Behälter (6, 6') verbunden zu werden (Abb. 13);

8. Vorrichtung nach einem der obenstehenden Ansprüche, gekennzeichnet:
dadurch, daß sie Mittel von der Art eines Zahnradgetriebes (42, 44, 46, 48) zum Drehantrieb der Dosier- und Formateinheit (8, 10) umfaßt (Abb. 1 und 2);

9. Vorrichtung nach einem der obenstehenden Ansprüche, gekennzeichnet:
dadurch, daß die besagten Mittel zur Zuführung des pastenartigen Mediums in die Schale (8) vom schiebenden Typ oberhalb des Mediums sind;

10. Vorrichtung nach Anspruch 9, gekennzeichnet:
dadurch, daß der Behälter (6) als Faltenbalg (20) ausgebildet und an den Mitteln zur Mediumzuführung vom schiebenden Typ (2) beteiligt ist (Abb. 9 und 10);

11. Vorrichtung nach Anspruch 9, gekennzeichnet:
dadurch, daß die Mittel zur Mediumzuführung vom Extrudiertyp mindestens eine Schnecke (30) umfassen (Abb. 12);

12. Vorrichtung nach einem der Ansprüche 1 bis 8, gekennzeichnet:
dadurch, daß die Mittel (26) zur Mediumzuführung vom Typ mit Unterdruck sind, der nach der Kammer (3) und durch die Entlüftungsöffnung (14) gebildet wird (Abb. 17).
